Europäisches Patentamt

European Patent Office

Office européen des brevets

(11) Publication number: **0 023 233**
**B1**

## (12) EUROPEAN PATENT SPECIFICATION

(45) Date of publication of patent specification: **05.10.83**

(51) Int. Cl.³: **B 23 B 45/16**

(21) Application number: **79103130.5**

(22) Date of filing: **24.08.79**

(54) **Three-speed gear mechanism in a power tool.**

(30) Priority: **25.07.79 US 60437**

(43) Date of publication of application:
**04.02.81 Bulletin 81/5**

(45) Publication of the grant of the patent:
**05.10.83 Bulletin 83/40**

(84) Designated Contracting States:
**AT BE CH DE FR GB IT LU NL SE**

(56) References cited:
**DE - A - 1 948 055**
**DE - A - 2 511 469**
**DE - C - 143 482**
**FR - A - 341 060**
**GB - A - 7 410**
**GB - A - 1 337 944**
**US - A - 3 176 547**
**US - A - 3 178 955**
**US - A - 3 178 956**
**US - A - 3 500 696**

(73) Proprietor: **Black & Decker Inc.**
**Drummond Plaza Office Park 1423 Kirkwood Highway**
**Newark Delaware 19711 (US)**

(72) Inventor: **Grossmann, Horst**
**Fliederweg 10**
**D-6257 Huenfelden 1 (DE)**

(74) Representative: **UEXKÜLL & STOLBERG**
**Patentanwälte**
**Beselerstrasse 4**
**D-2000 Hamburg 52 (DE)**

Courier Press, Leamington Spa, England

Three-speed gear mechanism in a power tool

The present invention relates to power tools and in particular to a multiple speed gear mechanism in a power tool capable of performing in a "hammer drill mode" of operation such as a hammer drill.

Multiple speed gear mechanisms are known in the power tool art and are generally utilized where it is desired to provide a tool, such as a drill, with the capability of operating at different speeds while maintaining the speed of the motor at a fixed predetermined rate. Prior art multiple speed gear mechanisms for drills, such as disclosed in U.S. Patents Nos. 2,911,841 and 3,396,593, typically comprise an output spindle having disposed thereon a pair of gears for selectively imparting either a high or low rotational speed to the output spindle. A shift mechanism is provided to alter the position of torque transmitting means coupled to the output spindle for selectively coupling the output spindle to a motor drive through either the high or low speed gear.

A hammer drill having a two speed gear mechanism is disclosed in U.S. Patent No. 3,785,443.

A three speed gear mechanism for a hand power tool is disclosed in German Patent No. 143,482. This includes three gears mounted on one shaft, the middle gear being axially movable to engage in clutch-like manner the gear on either side. Three non-axially movable gears are mounted on a parallel shaft. However, this gear mechanism is for rotary only drive of the output spindle and is not adapted for the output spindle to perform reciprocatory movement.

The primary object of the present invention is to provide an improved three-speed gear mechanism that is adapted to accommodate reciprocatory movement of the output spindle which occurs during the operation of certain power tools such as hammer drills.

According to the present invention there is provided a power tool having a spindle adapted to be rotatably driven by a motor drive through a three-speed gear mechanism, said gear mechanism comprising first and third output gears freely journalled on said spindle and a second output gear keyed to said spindle intermediate said first and third output gears by a spline key engaged in a longitudinal groove formed in said spindle, said spline key having a length substantially equal to the axial distance between said first and third output gears, said second output gear being axially movable relative to said first and third output gears, and select means for axially moving said second output gear relative to said first and third output gears for selectively coupling said spindle to said motor drive through one of said three output gears for causing said spindle to rotate at one of three selected speeds, characterized by means for imparting axial reciprocatory movement to said spindle, said spline key being slidably engaged in said longitudinal groove, said longitudinal groove being axially longer than said spline key to allow said key to slide axially relative to said groove to accommodate reciprocatory movement of said spindle without such movement being imparted to said key, and means, operating in conjunction with said spline key, for constraining axial movement of said first and third output gears.

Thus, it will be appreciated that the spline key serves in maintaining the positioning of the first and third output gears while at the same time permitting the percussive movement of the spindle.

Additional objects and advantages of the present invention will become apparent from a reading of the detailed description of the preferred embodiment which makes reference to the following set of drawings in which:

FIG. 1 is a side elevational view, partly in longitudinal section, illustrating a hammer drill incorporating a three-speed gear mechanism according to the present invention;

FIG. 2 is an enlarged sectional view of the three-speed gear mechanism illustrated in FIG. 1;

FIG. 3 is a transverse sectional view taken along line 3—3 in FIG. 2;

FIG. 4 is a diagrammatic view illustrating the shift mechanism of the present invention;

FIG. 5 is a diagrammatic view illustrating the three-speed gear mechanism in the low-speed position;

FIG. 6 is a diagrammatic view illustrating the three-speed gear mechanism in the intermediate-speed position;

FIG. 7 is a diagrammatic view illustrating the three-speed gear mechanism in the high-speed position; and

FIG. 8 is a diagrammatic view illustrating an alternative embodiment of the three-speed gear mechanism of the present invention.

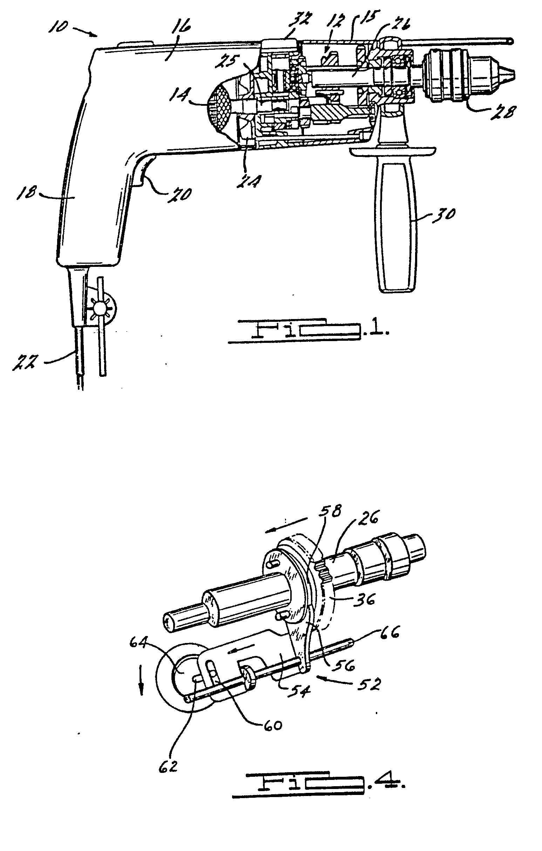

Referring to FIG. 1, an impact or hammer drill 10 incorporating a three-speed gear mechanism 12 according to the present invention is shown.

The hammer drill 10 is conventional in overall layout, comprising a motor 14 (partly shown) disposed within a casing 16 in part defining a piston grip-type handle 18 incorporating a trigger-type on/off switch 20. Power to the tool 10 is supplied via the usual power cord 22 extending from the bottom of the handle 18. A fan 24 is affixed to the shaft 25 of the motor 14 to facilitate cooling of the tool 10. The motor 14 drives an output spindle 26 through the three-speed gear mechanism 12 which is disposed in a gear case 15 fastened to the forward end of casing 16. The spindle 26 extends outwardly beyond the front of gear case 15 and has affixed to its exposed end a chuck 28 for securing a drill bit thereto. An additional depending handle 30 is mounted to the front end of gear case 15 to provide means for supporting the forward end of the tool 10. Furthermore, a rotary select knob 32 exposed through an opening in the top of the casing 16 is provided for selecting between hammer drill or drill only operation of the tool 10 in a manner to be subsequently described.

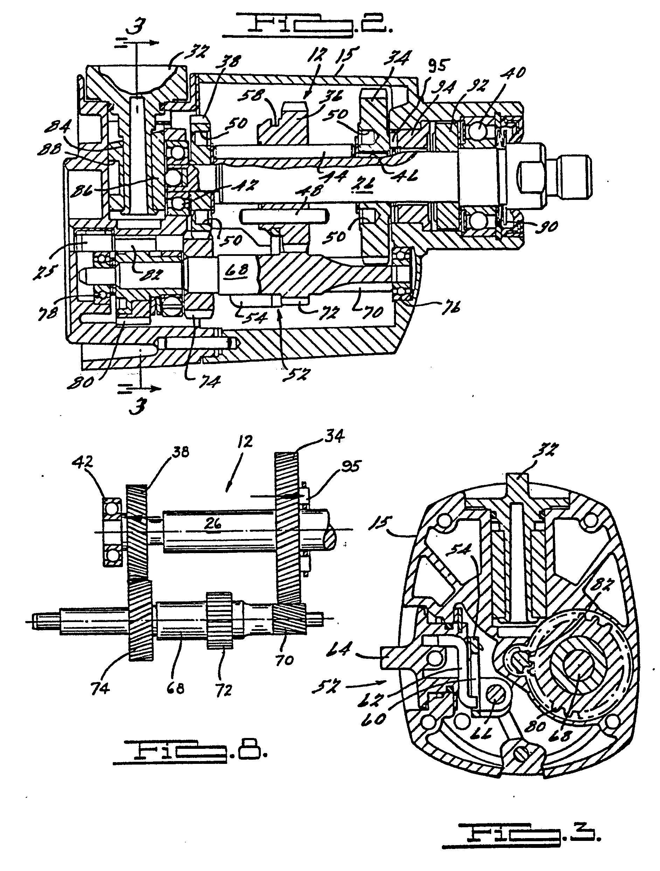

Turning now to FIG. 2, a detailed sectional view of the three-speed gear mechanism 12 of the present invention is shown. The gear mechanism 12 includes three output gears 34, 36 and 38, comprising the low, intermediate and high speed gears, respectively. The low speed 34 and high speed 38 gears are freely journalled to the output spindle 26 which is in turn journalled in and supported by ball bearings 40 and 42 mounted in the forward end and rear wall, respectively, of the gear case 15. The intermediate speed gear 36 is keyed to spindle 26 via a spline key 44 which engages a longitudinal slot 46 formed in the spindle 26. The spline key 44 can, for example, be of circular cross-section. It will be noted that the length of the spline key 44 is such that it maintains the proper spaced relationship between the low and high speed gears 34 and 38. In particular, the position of the low speed gear 34 is constrained by an axial bearing 95 in the front wall of gear case 15 on one side and spline key 44 on the other, and the high speed gear 38 is constrained by ball bearing 42 in the rear wall of gear case 15 on one side and spline key 44 on the other. Additionally, it will be noted that the length of the longitudinal groove 46 formed in spindle 26 exceeds the length of spline key 44. This is to permit the spline key 44 to slide within groove 46 to accommodate the reciprocating movement of spindle 26 when the tool 10 is operated in the hammer drill mode.

One or more equally radially spaced pins 48 are fixedly mounted in the intermediate speed gear 36 so as to protrude from both sides thereof as shown. A corresponding number of equally radially spaced detents 50 are formed in the opposed face of both the low speed 34 and high speed 38 gears which are adapted to engage the pins 48 in intermediate speed gear 36 when the intermediate speed gear 36 is juxtaposed with either the low speed 34 or high speed 38 gear.

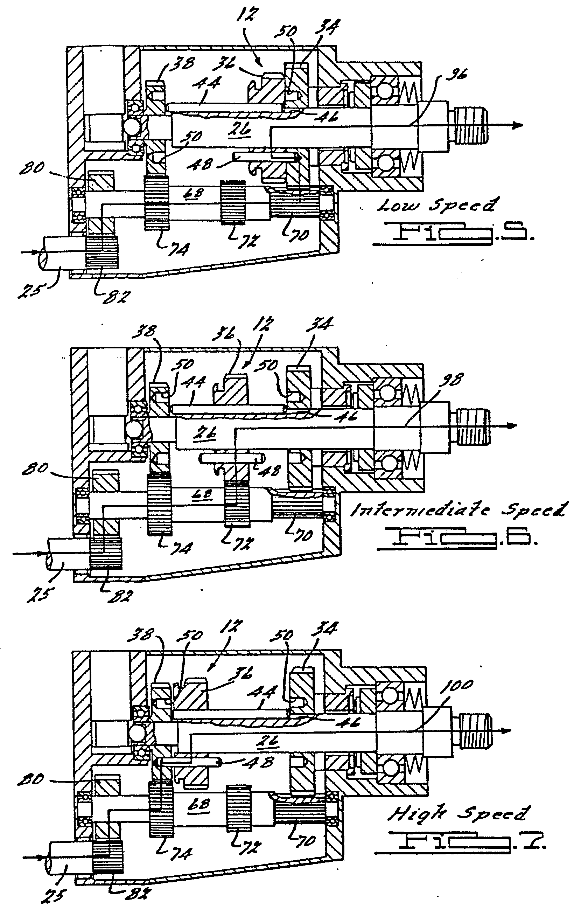

The axial position of the intermediate speed gear 36 is controlled by a shift mechanism 52 which is best illustrated in FIGS. 3 and 4. The shift mechanism 52 comprises a guide fork 54 having prongs 56 that engage a circumferential groove 58 formed in intermediate speed gear 36. Guide fork 54 includes a flat portion having a slot 60 formed therein that is adapted to receive one end of an S-shaped pin 62 that is eccentrically mounted at its other end to a knob 64 that is rotatable through an angle of 180°. Rotation of the knob 64 rotates S-shaped pin 62 causing guide fork 54 to slide along guide pin 66 to one of three different positions corresponding to the respective positions of the intermediate speed gear 36 shown in FIGS. 5—7, to be subsequently described.

Returning to FIG. 2, the low speed 34 and high speed 38 gears are permanently engaged with a pair of idler gears, 70 and 74 respectively, mounted to an idler shaft 68 which is journalled in and supported by a pair of ball bearings 76 and 78 mounted in the front and rear walls respectively of gear case 15. Idler gear 70 actually comprises a pinion type gear formed on idler shaft 68. A third idler gear 72 is additionally mounted to idler shaft 68 and is adapted to engage intermediate speed gear 36 when gear 36 is in the position illustrated in FIGS. 2 and 6. A pinion gear 82 formed on the end of motor shaft 25 drives idler shaft 68 through a gear 80 fixedly mounted to the rearward end of idler shaft 68.

Turning momentarily to FIG. 8, an alternative embodiment of the present three-speed gear mechanism 12 is diagrammatically illustrated. In this embodiment, the low speed 34 and high speed 38 output gears as well as the corresponding idler gears, 70 and 74 respectively, to which they are engaged have helical teeth. With this helical gear configuration, output gears 34 and 38, which are freely journalled to output spindle 26, will exert axially opposed thrust loads against end bearings 95 and 42 respectively, as represented by the arrows, when driven by idler gears 70 and 74 to thereby relieve any axial loading on spline key 44.

As noted previously, the hammer drill 10 disclosed herein is adapted to operate in either one of two modes: the hammer drill mode or the drill only mode. Mode selection is made via knob 32 which has a shaft 84 that has affixed thereto a cam member 86 having a recess 88 formed in a radial segment thereof. A pair of juxtaposed gears 92 and 94 having ratchet teeth formed on their opposed faces is provided at the forward end of spindle 26. Gear 92 is fixedly mounted to spindle 26 so as to rotate therewith. Gear 94, however, is fixedly mounted to the wall of gear case 15 so that it remains stationary relative to gear 92. A spring 90 is provided to forwardly bias the spindle 26 so that a slight gap is created between the opposed faces of gears 92 and 94 as shown.

Thus, it will be appreciated that when the mode-select knob 32 is rotated to the position illustrated in FIG. 2, the cam member 86 will abut the rearward end of output spindle 26 preventing reciprocal movement thereof. Accordingly, in this position, the tool will operate in the drill only mode. However, upon rotation of knob 32 through an angle of 180°, recess 88 in cam member 86 will align with the rearward end of output spindle 26. Therefore, when the tool bit is pressed against the workpiece, spindle 26 will move rearwardly against the bias of spring 90 enabling the ratchet teeth of gears 92 and 94 to mutually engage, thereby imparting a reciprocating motion to spindle 26 as it rotates.

Referring now to FIGS. 5, 6 and 7, the operation of the three-speed gear mechanism 12 according to the present invention in each of its three operative positions will now be explained. Looking first to FIG. 5, the shift knob has been rotated so that intermediate speed gear 36 is juxtaposed with low speed gear 34. In this configuration, pins 48 affixed to gear 36 are engaged with detents 50 formed in the face of gear 34 causing gear 36 to rotate with gear 34. Accordingly, torque is transmitted to output spindle 26 from motor shaft 25 through pinion gear 82, gear 80, idler shaft 68, pinion gear 70, gear 34, pins 48, gear 36 and spline key 44, as indicated by the solid line designated 96. Thus, since torque is transmitted from idler shaft 68 to output spindle 26 through gears 70 and 34, spindle 26 will rotate as its low speed rate.

In FIG. 6, the intermediate speed gear 36 has been shifted to its intermediary position in which it is engaged directly with idler gear 72 on shaft 68. In this configuration, torque is transmitted from motor shaft 25 to output spindle 26 through pinion gear 82, gear 80, idler shaft 68, gear 72, gear 36 and spline key 44, as indicated by the solid line designated 98. Accordingly, since torque is transmitted from idler shaft 68 to output spindle 26 through gears 72 and 36, spindle 26 will rotate at its intermediate speed rate.

Finally, in FIG. 7 the intermediate speed gear 36 has been shifted into juxtaposed relation with high speed gear 38 such that pins 48 in gear 36 engage detents 50 formed in the face of gear 38 causing gear 36 to rotate with gear 38. Accordingly, in this position torque is transmitted from motor shaft 25 to output spindle 26 through pinion gear 82, idler shaft 68, gear 74, gear 38, pins 48, gear 36 and spline key 44, as indicated by the solid line designated 100. Thus, since torque is transmitted from idler shaft 68 to output spindle 26 through gears 74 and 38, spindle 26 will rotate at its high speed rate.

From the above description, it can be seen that in the low and high speed conditions illustrated in FIGS. 5 and 7, the intermediate speed gear 36 serves as a clutch transmitting torque from the low speed gear 34 and high speed gear 38, respectively, to the output spindle 26; whereas in the intermediate speed condition shown in FIG. 6, gear 36 serves as the primary output gear transmitting torque to spindle 26 directly from idler shaft 68.

Also of significant note is the manner in which the present three-speed gear mechanism 12 accommodates the reciprocatory movement of the spindle 26 in the hammer drill mode while maintaining proper gear alignment between the output gears journalled to the spindle 26 and the idler gears mounted to the idler shaft 68. More specifically, it can be seen that while the high speed and low speed gears 34 and 38 must be freely journalled to spindle 26 to permit axial movement thereof, it is also essential that the low speed gear 34 and high speed gear 38 remain stationary relative to idler shaft 68. In this regard, the multiple functions served by spline key 44 can be appreciated. In particular, spline key 44 not only transmits torque from intermediate speed gear 36 to spindle 26 in all three opposite operative positions of the gear mechanism, it also serves to constrain axial movement of low speed gear 34 and high speed gear 38. As discussed previously, this is accomplished by making the length of spline key 44 equal to the distance between gears 34 and 38 and by lengthening slot 46 in spindle 26 so that it exceeds the length of spline key 44. In this manner, when spindle 26 reciprocates, spline key 44 will remain stationary in the axial direction while continuing to transmit torque to the spindle 26 by maintaining a sliding engagement with slot 46.

While the above description constitutes the preferred embodiment of the present invention, it will be appreciated that the invention is susceptible to modification, variation and change without departing from the scope of the accompanying claims.

## Claims

1. A power tool having a spindle (26) adapted to be rotatably driven by a motor drive (25) through a three-speed gear mechanism (12), said gear mechanism (12) comprising first (34) and third (38) output gears freely journalled on said spindle (26) and a second output gear (36) keyed to said spindle (26) intermediate said first (34) and third (38) output gears by a spline key (44) engaged in a longitudinal groove (46) formed in said spindle (26), said spline key (44) having a length substantially equal to the axial distance between said first (34) and third (38) output gears, said second (36) output gear being axially movable relative to said first (34) and third (38) output gears, and select means (52) for axially moving said second output gear (36) relative to said first (34) and third (38) output gears for selectively coupling said spindle (26) to said motor drive (25) through one of said three output gears (34, 36, 38) for causing said spindle (26) to rotate at one of three selected speeds, characterized by: means for imparting axial reciprocatory movement to said spindle (26); said spline key (44) being slidably engaged in said longitudinal groove (46); said longitudinal groove (46) being axially longer than said spline key (44) to allow said key (44) to slide axially relative to said groove (46) to accommodate reciprocatory movement of said spindle (26) without such movement being imparted to said key (44); and means (42, 95), operating in conjunction with said spline key (44), for constraining axial movement of said first (34) and third (38) output gears.

2. The power tool of Claim 1, characterized in that said select means (52) is adapted to shift said second output gear (36) into juxtaposed relation with said first output gear (34) in a first operative position (Fig. 5) and into juxtaposed relation with said third output gear (38) in a second operative position (Fig. 7).

3. The power tool of Claim 2, characterized by: first (70), second (72) and third (74) idler gears drivingly coupled to said motor drive (25), said first (70) and third (74) idler gears being respectively engaged with said first (34) and third (38) output gears; and torque transmitting means (48, 50) for transmitting torque from said first output gear (34) to said second output gear (36) in said first operative position (Fig. 5) and from said third output gear (38) to said second output gear (36) in said second operative position (Fig. 7).

4. The power tool of Claim 1, 2 or 3, characterized in that said constraining means (42, 95) comprises first (95) and second (42) bearings mounted in walls of a gear case (15) containing said gear mechanism (12).

5. The power tool of Claim 4, characterized in that said first output gear (34) is constrained against axial movement by said first bearing (95) on one side and said spline key (44) on the other side, and said third output gear (38) is constrained against axial movement by said second bearing (42) on one side and said spline key (44) on the other side.

6. The power tool of any one of the preceding claims, characterized by said power tool being a hammer drill having a drill only mode of operation and a hammer drill mode of operation, and means (86) cooperating with said spindle (26) for selectively changing the hammer drill from the drill only mode to the hammer drill mode and vice versa.

7. The power tool of Claim 6, characterized by: a pair of juxtaposed gears (92, 94) having ratchet teeth formed on their opposed faces and being provided at the forward end of said spindle (26) for imparting said axial reciprocatory movement to said spindle (26) in said hammer drill mode; said mode changing means (86) cooperating with the rearward end of said spindle (26); and said first, second and third output gears (34, 36, 38) being located axially between said mode changing means (86) and said pair of ratchet teeth gears (92, 94).

**Patentansprüche**

1. Kraftgetriebenes Werkzeug mit einer von einem Motorantrieb (25) über ein Drei-Geschwindigkeiten-Getriebe (12) drehbaren Spindel (26), bei dem das Getriebe (12) auf der Spindel (26) frei drehbar gelagerte erste (34) und dritte (38) Ausgangszahnräder und ein zwischen dem ersten (34) und dem dritten (38) Ausgangszahnrad mittels eines Nutkeiles (44), der in Eingriff mit einer in der Spindel (26) gebildeten länglichen Nut (46) steht, auf die Spindel (26) gekeiltes zweites Ausgangszahnrad (36) aufweist und der Nutkeil (44) eine Länge im wesentlichen gleich dem axialen Abstand zwischen dem ersten (34) und dem dritten (38) Ausgangszahnrad hat, wobei das zweite (36) Ausgangszahnrad axial bezüglich des ersten (34) und des dritten (38) Ausgangszahnrades bewegbar ist, sowie mit Wahlmitteln (52) zur axialen Bewegung des zweiten Ausgangszahnrades (36) bezüglich des ersten (34) und des dritten (38) Ausgangszahnrades zur wahlweisen Kopplung der Spindel (26) mit dem Motorantrieb (25) durch eines der drei Ausgangszahnräder (34, 36, 38), um eine Drehung der Spindel (26) mit einer der drei gewählten Geschwindigkeiten zu bewirken, gekennzeichnet durch Mittel zur Bewirkung einer axialen Hin- und Herbewegung der Spindel (26); einen verschiebbaren Eingriff des Nutkeils (44) in der Längsnut (46); eine axial längere Ausbildung der Längsnut (46) als des Nutkeils (44), um den Keil (44) axial bezüglich der Nut (46) zu verschieben, so daß eine Anpassung an die Hin- und Herbewegung der Spindel (26) ohne eine Übertragung einer derartigen Bewegung auf den Keil (44) erfolgt; und Mittel (42, 95), die zusammen mit dem Nutkeil (44) arbeiten, um eine axiale Bewegung des ersten (34) und des dritten (38) Ausgangszahnrades zu verhindern.

2. Kraftgetriebenes Werkzeug nach Anspruch 1, dadurch gekennzeichnet, daß die Wahlmittel (52) geeignet sind, das zweite Ausgangszahnrad (36) in einer ersten Betriebsstellung (Figur 5) in benachbarte Lage zum ersten Ausgangszahnrad (34) und in einer zweiten Betriebsstellung (Figur 7) in eine benachbarte Lage zum dritten Ausgangszahnrad (38) zu verschieben.

3. Kraftgetriebenes Werkzeug nach Anspruch 2, gekennzeichnet durch treibend mit dem Motorantrieb (25) gekoppelte erste (70), zweite (72) und dritte (74) Leerlaufzahnräder, wobei das erste (70) und das dritte (74) Leerlaufzahnrad jeweils mit dem ersten (34) und dem dritten (38) Ausgangszahnrad gekoppelt ist; und Drehmomenten-Übertragungsmitteln (48, 50) zur Übertragung eines Drehmomentes vom ersten Ausgangszahnrad (34) zum zweiten Ausgangszahnrad (36) in der ersten Betriebsstellung (Figur 5) und vom dritten Ausgangszahnrad (38) zum zweiten Ausgangszahnrad (36) in der zweiten Betriebsstellung (Figur 7).

4. Kraftgetriebenes Werkzeug nach Anspruch 1, 2 oder 3, dadurch gekennzeichnet, daß die Verhinderungsmittel (42, 95) ein erstes (95) und eines zweites (42) Lager aufweisen, die in den Wänden eines das Getriebe (12) enthaltenden Getriebegehäuses (15) befestigt sind.

5. Kraftgetriebenes Werkzeug nach Anspruch 4, dadurch gekennzeichnet, daß das erste Ausgangszahnrad (34) an einer Seite vom ersten Lager (95) und an der anderen Seite vom Nutkeil (44) gegen axiale Bewegung gehalten ist und das dritte Ausgangszahnrad (38) an einer Seite vom zweiten Lager (42) und an der anderen Seite vom Nutkeil (44) gegen axiale Bewegung gehindert ist.

6. Kraftgetriebenes Werkzeug nach einem der vorhergehenden Ansprüche, dadurch gekennzeichnet, daß das kraftgetriebene Werkzeug eine Schlagbohrmaschine ist, die einen Betriebszustand für das reine Bohren und einen Schlagbohr-Betriebszustand hat und mit der Spindel (26) zusammenarbeitende Mittel (86) zur wahlweisen Umschaltung der Schlagbohrmaschine vom reinen Bohrbetrieb in den Schlagbohrbetrieb und umgekehrt aufweist.

7. Kraftgetriebenes Werkzeug nach Anspruch 6, gekennzeichnet durch ein Paar benachbarter Zahnräder (92, 94) mit auf gegenüberliegenden Flächen ausgebildeten Ratschenzähnen, welche an dem vorderen Ende der Spindel (26) vorgesehen sind, um der Spindel (26) im Schlagbohrbetrieb die axiale Hin- und Herbewegung zu erteilen; das Zusammenwirken der Zustands-Umschaltemittel (86) mit dem hinteren Ende der Spindel (26); und der Anordnung der ersten, zweiten und dritten Ausgangszahnräder (34, 36, 38) axial zwischen den Zustands-Umschaltmitteln (86) und dem Paar Ratschenzähne aufweisenden Zahnrädern (92, 94).

**Revendications**

1. Un outil à moteur ayant une broche (26) adaptée pour être entraînée en rotation par un entraînement à moteur (25) par l'intermédiaire d'un mécanisme à engrenages à trois vitesses (12), ce mécanisme à engrenages comprenant une première et une troisième roues dentées de sortie (34, 38) tourillonnées librement sur ladite broche (26) et une deuxième roue dentée de sortie (36) clavetée sur ladite broche entre la première et la troisième roues dentées de sortie (34, 38) par une clavette (44) engagée dans une rainure longitudinale (46) formée dans ladite broche (26), ladite clavette (44) ayant une longueur sensiblement égale à la distance axiale entre lesdites première et troisième roues dentées de sortie (34, 38), ladite deuxième roue dentée de sortie (36) étant mobile dans la direction axiale par rapport auxdites première et troisième roues dentées de sortie (34, 38) et des moyens de sélection (52) servant à déplacer axialement ladite deuxième roue dentée de sortie (36) par rapport auxdites première et troisième roues dentées de sortie (34, 38) pour accoupler sélectivement ladite broche (26) audit entraînement à moteur (25) à travers l'une desdites trois roues dentées de sortie (34, 36, 38) pour faire tourner ladite broche (26) à l'une de trois vitesses sélectionnées, caractérisé par des moyens servant à imprimer un mouvement axial alternatif à ladite broche (26), ladite clavette (44) étant engagée à coulissement dans ladite rainure longitudinale (46), ladite rainure longitudinale (46) étant plus longue dans la direction axiale que ladite clavette (44) pour permettre à ladite clavette (44) de glisser axialement par rapport à ladite rainure pour admettre le mouvement alternatif de ladite broche (26) sans que ce mouvement ne soit imprimé à ladite clavette (44) et des moyens (42, 95), qui travaillent en combinaison avec ladite clavette (44) pour limiter le mouvement axial desdites première et troisième roues dentées (34, 38).

2. L'outil à moteur de la revendication 1, caractérisé en ce que lesdits moyens de sélection (52) sont adaptés pour amener ladite deuxième roue dentée de sortie (36) dans une relation juxtaposée à ladite première roue dentée de sortie (34) dans une première position active (figure 5) et dans une position juxtaposée à ladite troisième roue dentée de sortie (38) dans une deuxième position active (figure 7).

3. L'outil à moteur de la revendication 2, caractérisé par une première, une deuxième et une troisième roues dentées de renvoi (70, 72, 74) couplées pour la transmission du mouvement audit entraînement à moteur (25), lesdites première et troisième roues dentées de renvoi (70, 74) étant respectivement en prise avec lesdites première et troisième roues dentées de sortie (34, 38); et des moyens de transmission du couple (48, 50) servant à transmettre le couple de la première roue dentée de sortie (34) à la deuxième roue dentée de sortie (36) dans ladite première position active (figure 5) et de ladite troisième roue dentée de sortie (38) à ladite deuxième roue dentée de sortie (36) dans ladite deuxième position active (figure 7).

4. L'outil à moteur de la revendication 1, 2 ou 3, caractérisé en ce que lesdits moyens de limitation (42, 95) comprennent un premier palier (95) et un deuxième palier (42) montés dans des parois d'une boîte à engrenages (15) qui contient ledit mécanisme à engrenages (12).

5. L'outil à moteur de la revendication 4, caractérisé en ce que ladite première roue dentée de sortie (34) est bloquée contre le déplacement axial par ledit premier palier (95) d'un côté et la clavette (44) de l'autre côté et que ladite troisième roue dentée de sortie (38) est bloquée contre tout déplacement axial par ledit deuxième palier (42) d'un côté et par ladite clavette (44) de l'autre côté.

6. L'outil à moteur de l'une quelconque des revendications précédentes, caractérisé en ce que ledit outil à moteur est une perceuse à percussion ayant un mode de fonctionnement en perçage seul et un mode de fonctionnement en perçage à percussion et des moyens (86) coopérant avec ladite broche (26) pour changer sélectivement la perceuse à percussion du mode perçage seul au mode perçage à percussion et inversement.

7. L'outil à moteur de la revendication 6, caractérisé par une paire de roues dentées juxtaposées (92, 94) ayant des dents de rochet formées sur leurs faces opposées et qui sont prévues sur l'extrémité avant de ladite broche (26) pour imprimer ledit mouvement alternatif axial à ladite broche (26) dans ledit mode perçage à percussion; lesdits moyens de changement de mode (86) coopérant avec l'extrémité arrière de ladite broche (26); et lesdites première, deuxième et troisième roues dentées de sortie (34, 36, 38) étant placées axialement entre lesdits moyens de changement de mode (86) et ladite paire de roues dentées à dents de rochet (92, 94).

FIG.1.

FIG.4.

FIG.2.

FIG.8.

FIG.3.

2

Low Speed
FIG.5.

Intermediate Speed
FIG.6.

High Speed
FIG.7.